# EUROPEAN PATENT APPLICATION

(11) **EP 4 741 234 A1**
(43) Date of publication of application: **13.05.2026**
(21) Application number: 23944850.9
(22) Date of filing: 08.10.2023
(51) Int. Cl.: B60S 5/06, B60L 53/80

(54) **BATTERY SWAPPING DEVICE AND BATTERY SWAPPING STATION**

(30) Priority: 07.07.2023 CN 202321775824 U
(71) Applicant: Contemporary Amperex Technology Co., Limited, Ningde, Fujian 352100 (CN)
(72) Inventor: WU, Kai, Ningde, Fujian 352100 (CN); CHAN, Libing, Ningde, Fujian 352100 (CN)
(74) Representative: Ziebig Hengelhaupt Intellectual Property Attorneys Patentanwaltskanzlei PartGmbB
(86) International application number: PCT/CN2023/123306
(87) International publication number: WO 2025/010844

(57) **Abstract**

A battery swapping device and a battery swapping station. The battery swapping device (5) comprises a plurality of battery swapping platforms (51) and a lifting mechanism (52), each battery swapping platform (51) being used for dismounting and mounting a battery (11) of an electrical device (6), and the lifting mechanism (52) being connected to the plurality of battery swapping platforms (51) and used for driving the plurality of battery swapping platforms (51) to move up and down. The lifting mechanism (52) enables the plurality of battery swapping platforms (51) to move up and down, such that the plurality of battery swapping platforms (51) can be close to or away from the electrical device (6); and the plurality of battery swapping platforms (51) can simultaneously replace batteries (11) of the electrical device (6), thereby improving the battery (11) swapping efficiency, shortening the battery (11) swapping time, and improving user experience.

## Description

### CROSS-REFERENCE TO RELATED APPLICATION

The present application claims priority to Chinese Patent Application No. 202321775824.7 filed on July 07, 2023 and entitled "BATTERY SWAPPING DEVICE AND BATTERY SWAPPING STATION", the content of which is incorporated herein by reference in its entirety.

### TECHNICAL FIELD

The present application relates to the field of batteries, and in particular, to a battery swapping device and a battery swapping station.

### BACKGROUND

With the development of new energy technologies, batteries are widely used in electric devices, such as mobile phones, laptop computers, electric bicycles, electric vehicles, electric airplanes, electric ships, electric toy cars, electric toy ships, electric toy airplanes, and electric tools.

Limited by battery capacity, electric devices require frequent charging, which takes time and affects the user experience.

### SUMMARY

The present application provides a battery swapping device and a battery swapping station, which can quickly swap a battery of an electric device.

In a first aspect, the present application provides a battery swapping device. The battery swapping device includes a plurality of battery swapping platforms and a lifting mechanism. Each battery swapping platform is configured to disassemble and assemble a battery of an electric device. The lifting mechanism is connected to the plurality of battery swapping platforms and is configured to drive the plurality of battery swapping platforms to ascend or descend.

The lifting mechanism can achieve the ascending or descending of the plurality of battery swapping platforms, such that the plurality of battery swapping platforms can be close to or away from the electric device. The plurality of battery swapping platforms can simultaneously swap the batteries of the electric device, thereby improving the battery swap efficiency, shortening the battery swap time, and improving the user experience.

In some embodiments, the lifting mechanism includes a plurality of lifting assemblies, and each lifting assembly is connected to at least one battery swapping platform and is configured to drive the battery swapping platform to ascend or descend.

The battery swapping device may control a number and positions of the lifting assemblies to be activated based on a number and positions of the batteries that need to be swapped for the electric device, thereby achieving the ascending or descending of the battery swapping platforms corresponding to the batteries and achieving the disassembly and assembly of the plurality of batteries. The battery swapping device according to the above embodiments has strong compatibility, and can be used with various specifications of electric devices.

In some embodiments, a number of the lifting assemblies is the same as a number of the battery swapping platforms, and the plurality of lifting assemblies are arranged in one-to-one correspondence with the plurality of battery swapping platforms. The ascending or descending of each battery swapping platform can be independently controlled, and the lifting motions of the plurality of battery swapping platforms are independent of each other. Therefore, the battery swapping device has better compatibility.

In some embodiments, the lifting assembly includes a carrying platform, a transmission assembly, and a drive assembly. The carrying platform is configured to support the battery swapping platform. The transmission assembly is arranged on one side of the carrying platform facing away from the battery swapping platform and is connected to the carrying platform. The drive assembly is connected to the transmission assembly, and the drive assembly is configured to drive the carrying platform to ascend or descend through the transmission assembly. Each lifting assembly is provided with an independent transmission assembly and a drive assembly, such that the corresponding carrying platform can be driven to ascend or descend as needed, thereby improving the compatibility of the battery swapping device.

In some embodiments, the lifting mechanism is configured to drive the plurality of battery swapping platforms to ascend or descend synchronously, thereby simplifying the structure of the battery swapping device.

In some embodiments, the battery swapping device further includes a plurality of adjustment mechanisms, each battery swapping platform is connected to the lifting mechanism through at least one adjustment mechanism, and the adjustment mechanism is configured to adjust a spatial posture of a corresponding battery swapping platform.

Due to the impact of factors such as the mounting precision of the battery and the positional deviation of the electric device, the spatial posture of the battery may deviate from an ideal state. In the above embodiments, by providing the adjustment structure, the spatial posture of the corresponding battery swapping platform can be adjusted based on the spatial posture of the battery, such that the spatial posture of the battery swapping platform is adapted to the spatial posture of the battery, thereby improving the alignment precision of the battery swapping platform and the battery, reducing the difficulty in the disassembly and assembly of the battery, and improving the disassembly and assembly efficiency.

In some embodiments, each battery swapping platform is connected to the lifting mechanism through at least two adjustment mechanisms. Two or more adjustment mechanisms can increase the adjustment range of the spatial posture of the battery swapping platform, and improve the stability of the battery swapping platform during the adjustment process.

In some embodiments, in a lifting direction of the battery swapping platform, the adjustment mechanism is configured to adjust a distance between the lifting mechanism and the battery swapping platform. Two or more adjustment mechanisms can change the heights of two or more positions of the battery swapping platform, thereby adjusting the inclination angle of the battery swapping platform. As a result, the spatial posture of the battery swapping platform is adapted to the spatial posture of the battery.

In some embodiments, the battery swapping platform is rectangular. The lifting mechanism is connected to four corners of the battery swapping platform through four adjustment mechanisms, respectively. The four adjustment mechanisms can respectively adjust the heights of the four corners of the battery swapping platform, such that the adjustment range of the inclination angle of the battery swapping platform can be increased, and the stability of the adjustment process can be improved.

In some embodiments, the adjustment mechanism includes a driving member and a push rod, the driving member is fixed to the lifting mechanism, the push rod is connected to the battery swapping platform, and the driving member is connected to the push rod and is configured to drive the push rod to move in the lifting direction.

In some embodiments, the battery swapping platform includes a support plate and a locking/unlocking mechanism. The support plate is configured to support the battery. The locking/unlocking mechanism is arranged on the support plate, and the locking/unlocking mechanism is configured to release locking between the battery and the electric device or lock the battery to the electric device.

In some embodiments, the battery swapping device further includes a moving mechanism, the moving mechanism is connected to the lifting mechanism, and the moving mechanism is at least configured to drive the lifting mechanism to move in a first direction, the first direction being perpendicular to the lifting direction of the battery swapping platform. By providing the moving mechanism, the lifting mechanism and the battery swapping platform can be driven to move, thereby achieving the transfer of the battery.

In some embodiments, the moving mechanism includes a first moving platform and a second moving platform. The first moving platform is configured to be movable in the first direction. The second moving platform is movably connected to the first moving platform in a second direction, the second direction intersects with the first direction and is perpendicular to the lifting direction, and the lifting mechanism is arranged on the second moving platform.

By providing the moving mechanism and the lifting mechanism, the movement of the battery swapping platform in the three-dimensional space can be achieved, such that the battery swapping device can adjust the battery swapping platform based on the position of the battery, thereby improving the compatibility of the battery swapping device.

In some embodiments, the moving mechanism further includes a rotating platform, the rotating platform is arranged on the second moving platform, and a rotating shaft of the rotating platform is parallel to the lifting direction. The lifting mechanism is arranged on the rotating platform.

The rotating platform can drive the battery swapping platform to rotate through the lifting mechanism, so as to adjust the angle of the battery swapping platform. As a result, the battery swapping device can adjust the battery swapping platform according to the position of the battery, thereby improving the compatibility of the battery swapping device.

In a second aspect, the present application provides a battery swapping station. The battery swapping station includes a support platform, a battery compartment, and the battery swapping device according to any one of the embodiments of the first aspect. The support platform is configured to support an electric device. The battery compartment is configured to store a battery and charge the battery. The battery swapping device is configured to be movable between the support platform and the battery compartment.

### BRIEF DESCRIPTION OF THE DRAWINGS

Features, advantages, and technical effects of exemplary embodiments of the present application will be described below with reference to the drawings.
FIG. 1 is a schematic structural diagram of a vehicle;
FIG. 2 is an exploded schematic view of a battery shown in FIG. 1;
FIG. 3 is a schematic diagram of a battery swapping station according to some embodiments of the present application;
FIG. 4 is a schematic structural diagram of a battery swapping device according to some embodiments of the present application;
FIG. 5 is an exploded schematic view of a lifting assembly of a lifting mechanism of a battery swapping device according to some embodiments of the present application;
FIG. 6 is a schematic structural diagram of a battery swapping device according to some other embodiments of the present application; and
FIG. 7 is a schematic structural diagram of a battery swapping device according to yet some other embodiments of the present application.

The drawings are not necessarily drawn to scale.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the aforementioned terms in the present application can be understood according to specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

The term "plurality of" used in the present application refers to no less than two (including two).

With the development of new energy technologies, more devices use batteries. When electric energy of an electric device is depleted, the electric device is usually connected to a charging device to replenish the electric energy. For example, an electric vehicle may be connected to a charging pile for charging. Charging takes a long time and affects the user experience.

Compared with charging, swapping the battery can achieve faster replenishment of electric energy. The present application provides a battery swapping device. A battery swapping platform of the battery swapping device can support a battery and complete battery assembly and disassembly. However, the battery swapping device is typically provided with only one battery swapping platform, and when swapping batteries for an electric device provided with a plurality of batteries, the battery swapping device can only swap a single battery at a time, resulting in low battery swap efficiency.

In view of this, the embodiments of the present application provide a battery swapping device. By providing a plurality of battery swapping platforms on a lifting mechanism, the battery swapping device enables the simultaneous swapping of a plurality of batteries, thereby improving the battery swap efficiency.

The battery swapping device and the battery swapping station using the battery swapping device disclosed in the embodiments of the present application may, but are not limited to, be used for swapping a battery of a vehicle. The vehicle may be a fuel vehicle, a gas vehicle, or a new energy vehicle. The new energy vehicle may be a pure electric vehicle, a hybrid vehicle, an extended-range vehicle, or the like.

An example in which the electric device is a vehicle is used below for description.

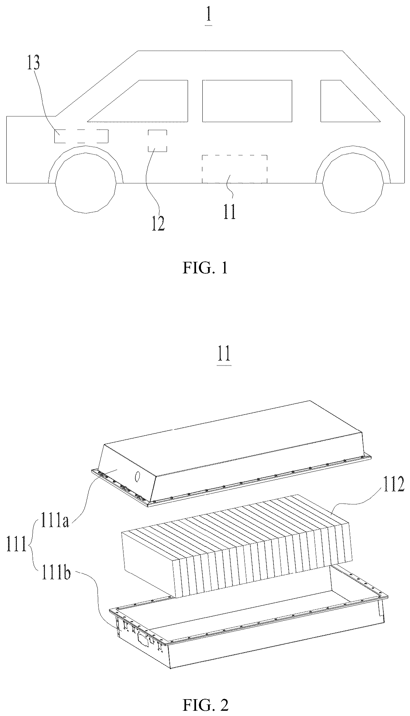

FIG. 1 is a schematic structural diagram of a vehicle. As shown in FIG. 1, a vehicle 1 is provided with a battery 11, and the battery 11 may be provided at the bottom, the head, or the tail of the vehicle 1. The battery 11 may be configured to power the vehicle 1. For example, the battery 11 may serve as an operation power source for the vehicle 1.

The vehicle 1 may further include a controller 12 and a motor 13. The controller 12 is configured to control the battery 11 to power the motor 13, e.g., for the operation power needed by the vehicle 1 for start-up, navigation, and driving.

In some embodiments of the present application, the battery 11 may not only serve as the operation power source for the vehicle 1, but also as a driving power source for the vehicle 1 to, replacing or partially replacing fuel or natural gas, provide driving power for the vehicle 1.

In some embodiments, the battery 11 may be snap-fitted to the chassis of the vehicle 1 through a snap-fit structure.

FIG. 2 is an exploded schematic view of the battery shown in FIG. 1. As shown in FIG. 2, the battery 11 may refer to a single physical module including one or a plurality of battery cells 112 to provide higher voltage and capacity.

In some embodiments, the battery 11 may be a battery pack.

As an example, the battery 11 includes a case 111 and battery cells 112. The battery cells 112 are accommodated in the case 111.

The case 111 may be a component that accommodates the battery cells 112. The case 111 provides an accommodating space for the battery cells 112, and the case 111 may be of various structures.

In some embodiments, the case 111 may include a first case part 111a and a second case part 111b. The first case part 111a and the second case part 111b are mutually lidded with each other. The first case part 111a and the second case part 111b jointly define an accommodating space for accommodating the battery cells 112. The second case part 111b may be of a hollow structure with one end open, the first case part 111a is of a plate-like structure, and the first case part 111a lids the open side of the second case part 111b to form the case 111 having the accommodating space. The first case part 111a and the second case part 111b may each also be of a hollow structure with one side open, and the open side of the first case part 111a lids the open side of the second case part 111b to form the case 111 having the accommodating space. Certainly, the first case part 111a and the second case part 111b may be of various shapes, such as a cylinder and a rectangular parallelepiped.

To improve the sealing performance after the first case part 111a and the second case part 111b are connected, a sealing member, such as a sealant or a seal ring, may be further provided between the first case part 111a and the second case part 111b.

If the first case part 111a lids the top part of the second case part 111b, the first case part 111a may also be referred to as an upper case cover, and the second case part 111b may also be referred to as a lower case body.

In the battery 11, one or a plurality of battery cells 112 may be provided. If a plurality of battery cells 112 are provided, the plurality of battery cells 112 may be connected in series, in parallel, or in series-parallel. The series-parallel connection means that both series connection and parallel connection are present in the connection of the plurality of battery cells 112.

The plurality of battery cells 112 may be directly connected in series, in parallel, or in series-parallel, and then the whole formed by the plurality of battery cells 112 is accommodated in the case 111. Certainly, the situation may be that the plurality of battery cells 112 are first connected in series, in parallel, or in series-parallel to form battery modules, and then the plurality of battery modules are connected in series, in parallel, or in series-parallel to form a whole and accommodated in the case 111.

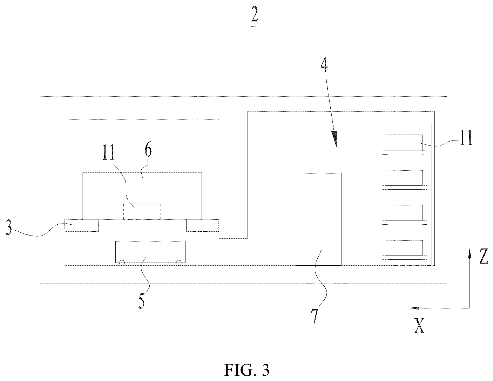

FIG. 3 is a schematic diagram of a battery swapping station according to some embodiments of the present application.

As shown in FIG. 3, in some embodiments, the battery swapping station 2 includes a support platform 3, a battery compartment 4, and a battery swapping device 5. The support platform 3 is configured to support an electric device 6. The battery compartment 4 is configured to store a battery 11 and charge the battery 11. The battery swapping device 5 is configured to be movable between the support platform 3 and the battery compartment 4. The battery swapping device 5 may be configured to swap the battery 11 of the electric device 6.

Illustratively, the battery swapping station 2 according to the embodiments of the present application can swap the battery 11 according to the following steps: I) After the electric device 6 enters the support platform 3, the battery swapping device 5 can be moved to the lower side of the electric device 6, and detach the battery 11 with depleted electric energy from the electric device 6; II) the battery swapping device 5 transfers the detached battery to be charged to the battery compartment 4 for charging, and receives the fully charged battery stored in the battery compartment 4; III) the battery swapping device 5 is moved to the lower side of the electric device 6 with the fully charged battery, and the fully charged battery is mounted to the electric device 6; and IV) the electric device 6 leaves the support platform 3.

In some embodiments, the battery swapping station 2 further includes a track, and the battery swapping device 5 is movably arranged on the track. The track is configured to guide the movement of the battery swapping device 5, such that the battery swapping device 5 can be moved between the support platform 3 and the battery compartment 4. Illustratively, one end of the track extends into the battery compartment 4, and the other end extends to the lower side of the support platform 3.

In some embodiments, the battery compartment 4 is provided with a stacker 7. The stacker 7 is configured to transfer the battery to be charged, which is detached by the battery swapping device 5, to a charging position of the battery compartment 4 for charging, and place the fully charged battery stored in the battery compartment 4 on the battery swapping device 5.

In some embodiments, the support platform 3 includes an elevating mechanism, and the elevating mechanism is configured to elevate the electric device 6, such that the battery swapping device 5 can be moved to the lower side of the electric device 6.

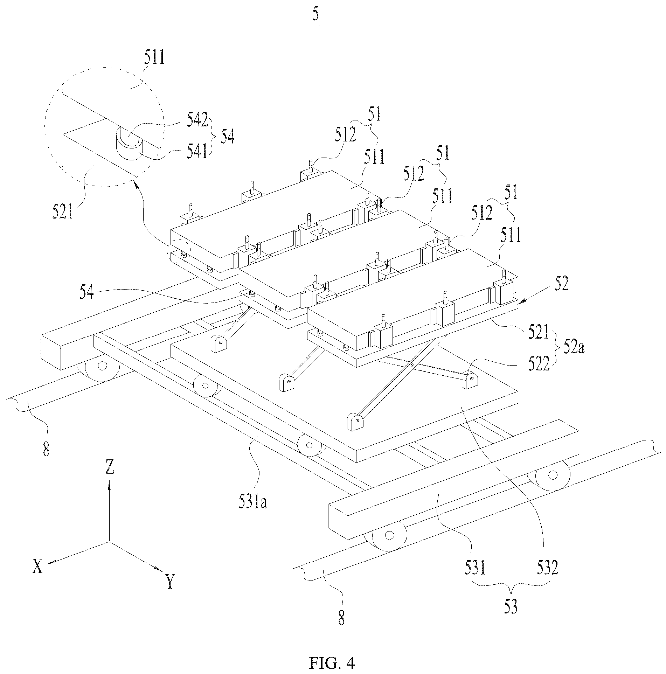

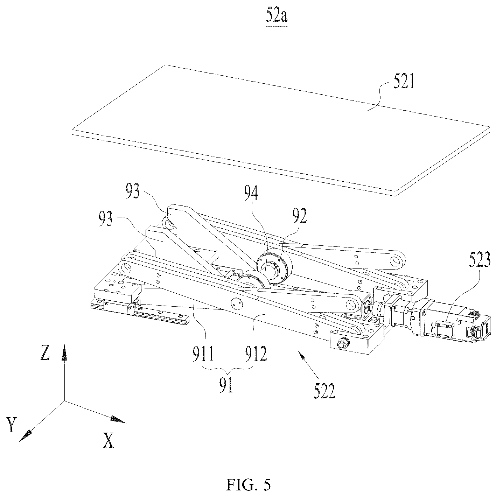

FIG. 4 is a schematic structural diagram of a battery swapping device according to some embodiments of the present application; and FIG. 5 is an exploded schematic view of a lifting assembly of a lifting mechanism of a battery swapping device according to some embodiments of the present application.

As shown in FIGs. 4 and 5, the battery swapping device 5 according to the embodiments of the present application includes a plurality of battery swapping platforms 51 and a lifting mechanism 52. Each battery swapping platform 51 is configured to disassemble and assemble the battery 11 of the electric device 6. The lifting mechanism 52 is connected to the plurality of battery swapping platforms 51 and is configured to drive the plurality of battery swapping platforms 51 to ascend or descend.

The battery swapping platform 51 may release the locking between the battery 11 and the electric device 6 to detach the battery 11 from the electric device 6; the battery swapping platform 51 may also lock the battery 11 to the electric device 6 to mount the battery 11 to the electric device 6.

The lifting mechanism 52 may synchronously drive the plurality of battery swapping platforms 51 to ascend or descend, or may independently drive the plurality of battery swapping platforms 51 to ascend or descend.

As an example, when the battery to be charged of the electric device 6 needs to be detached, the battery swapping device 5 is moved to the lower side of the electric device 6; the lifting mechanism 52 elevates the battery swapping platform 51, such that the battery swapping platform 51 abuts against the battery to be charged and supports the battery to be charged. After the battery swapping platform 51 releases the locking between the battery 11 and the electric device 6, the lifting mechanism 52 drives the battery to be charged to descend and disengages the battery to be charged from the electric device 6, thereby detaching the battery to be charged from the electric device 6.

The battery swapping device 5 transfers the detached battery to be charged to the battery compartment 4 for charging, and receives the fully charged battery stored in the battery compartment 4.

When the battery swapping device 5 needs to mount the fully charged battery to the electric device 6, the battery swapping device 5 is moved to the lower side of the electric device 6. The lifting mechanism 52 elevates the battery swapping platform 51, such that the battery swapping platform 51 is elevated with the fully charged battery and approaches the electric device 6. When the fully charged battery ascends to a predetermined position, the battery swapping platform 51 locks the fully charged battery with the electric device 6 to complete the swapping of the battery 11.

In the embodiments of the present application, the lifting mechanism 52 can achieve the ascending or descending of the plurality of battery swapping platforms 51, such that the plurality of battery swapping platforms 51 can be close to or away from the electric device 6. The plurality of battery swapping platforms 51 can simultaneously swap the batteries 11 of the electric device 6, thereby improving the swap efficiency of the batteries 11, shortening the swap time of the batteries 11, and improving the user experience.

In some embodiments, the lifting mechanism 52 includes a plurality of lifting assemblies 52a, and each lifting assembly 52a is connected to at least one battery swapping platform 51 and is configured to drive the battery swapping platform 51 to ascend or descend.

One lifting assembly 52a may drive one battery swapping platform 51 to ascend or descend, or may simultaneously drive two or more battery swapping platforms 51 to ascend or descend.

The lifting assembly 52a can only drive the battery swapping platform 51 connected thereto; the plurality of lifting assemblies 52a are independent of each other and do not interfere with each other. In other words, when one lifting assembly 52a drives the battery swapping platform 51 connected thereto to ascend or descend, the battery swapping platform 51 connected to another lifting assembly 52a is not affected.

In the embodiments of the present application, the battery swapping device 5 may control the number and positions of the lifting assemblies 52a to be activated based on the number and positions of the batteries 11 that need to be swapped for the electric device 6, thereby achieving the ascending or descending of the battery swapping platforms 51 corresponding to the batteries 11 and achieving the disassembly and assembly of the plurality of batteries 11. The battery swapping device 5 according to the embodiments of the present application has strong compatibility, and can be used with various specifications of electric devices 6.

In some embodiments, the number of the lifting assemblies 52a is the same as the number of the battery swapping platforms 51, and the plurality of lifting assemblies 52a are arranged in one-to-one correspondence with the plurality of battery swapping platforms 51.

In the embodiments of the present application, the ascending or descending of each battery swapping platform 51 can be independently controlled, and the lifting motions of the plurality of battery swapping platforms 51 are independent of each other. Therefore, the battery swapping device 5 according to the embodiments of the present application has better compatibility.

In some embodiments, the lifting assembly 52a includes a carrying platform 521, a transmission assembly 522, and a drive assembly 523. The carrying platform 521 is configured to support the battery swapping platform 51. The transmission assembly 522 is arranged on one side of the carrying platform 521 facing away from the battery swapping platform 51 and is connected to the carrying platform 521. The drive assembly 523 is connected to the transmission assembly 522, and the drive assembly 523 is configured to drive the carrying platform 521 to ascend or descend through the transmission assembly 522.

The drive assembly 523 is configured to provide power to drive the carrying platform 521 to move in a lifting direction Z through the transmission assembly 522. As an example, the drive assembly 523 includes, but is not limited to, at least one of a motor, a cylinder, and a hydraulic cylinder.

The transmission assembly 522 is configured to transmit the power provided by the drive assembly 523 to the carrying platform 521. As an example, the transmission assembly 522 includes, but is not limited to, at least one of a scissor-type transmission structure, a linkage transmission structure, a cam transmission structure, and a screw-and-nut transmission structure.

In the embodiments of the present application, each lifting assembly 52a is provided with an independent transmission assembly 522 and a drive assembly 523, such that the corresponding carrying platform 521 can be driven to ascend or descend as needed, thereby improving the compatibility of the battery swapping device 5.

In some embodiments, the battery swapping device 5 further includes a moving mechanism 53, the moving mechanism 53 is connected to the lifting mechanism 52, and the moving mechanism 53 is at least configured to drive the lifting mechanism 52 to move in a first direction X, the first direction X being perpendicular to the lifting direction Z of the battery swapping platform 51.

As an example, the first direction X may be parallel to a horizontal plane.

By providing the moving mechanism 53, the lifting mechanism 52 and the battery swapping platform 51 can be driven to move, thereby achieving the transfer of the battery 11.

By providing the moving mechanism 53, the battery swapping device 5 as a whole can move in the first direction.

In some embodiments, the support platform 3 and the battery compartment 4 may be arranged in the first direction X. The moving mechanism 53 can drive the battery swapping platform 51 to move in the first direction X through the lifting mechanism 52, such that the battery swapping platform 51 transfers the battery to be charged to the battery compartment 4, or the battery swapping platform 51 transfers the fully charged battery from the battery compartment 4 to the lower side of the electric device 6.

In some embodiments, the moving mechanism 53 includes a first moving platform 531 and a second moving platform 532. The first moving platform 531 is configured to be movable in the first direction X. The second moving platform 532 is movably connected to the first moving platform 531 in a second direction Y, the second direction Y intersects with the first direction X and is perpendicular to the lifting direction Z, and the lifting mechanism 52 is arranged on the second moving platform 532.

As an example, the first moving platform 531 may be arranged on a first guide rail 8 extending in the first direction X, and the transmission between the first moving platform 531 and the first guide rail 8 may be achieved through a rack, a belt, a chain, or another structure, such that the first moving platform 531 can move in the first direction X.

As an example, the first moving platform 531 may be provided with a second guide rail 531a extending in the second direction Y, and the second moving platform 532 is arranged on the second guide rail 531a. Optionally, the transmission between the second moving platform 532 and the second guide rail 531a may be achieved through a rack, a belt, a chain, or another structure, such that the second moving platform 532 can move in the second direction Y.

In the embodiments of the present application, by providing the moving mechanism 53 and the lifting mechanism 52, the movement of the battery swapping platform 51 in the three-dimensional space can be achieved, such that the battery swapping device 5 can adjust the battery swapping platform 51 based on the position of the battery 11, thereby improving the compatibility of the battery swapping device 5.

In some embodiments, the first direction X, the second direction Y, and the lifting direction Z are perpendicular to each other.

In some embodiments, the transmission assembly 522 includes a scissor unit 91, a first transmission member 92, and a second transmission member 93. The scissor unit 91 connects the moving mechanism 53 and the carrying platform 521. The first transmission member 92 is mounted on the scissor unit 91. The second transmission member 93 is connected to the drive assembly 523 and forms an inclined surface fit with the first transmission member 92. The drive assembly 523 is configured to drive the second transmission member 93, and drive the scissor unit 91 to perform a scissor motion through the first transmission member 92, so as to achieve the ascending or descending of the carrying platform 521.

Since the first transmission member 92 and the second transmission member 93 form the inclined surface fit, when the drive assembly 523 drives the second transmission member 93 to move, the first transmission member 92 and the second transmission member 93 can slide relative to each other along the inclined surface, and the drive assembly 523 can push the second transmission member 93 to move with a relatively small horizontal thrust. As a result, the scissor unit 91 can drive the carrying platform 521 to ascend or descend through the first transmission member 92, thereby reducing the power of the drive assembly 523 and reducing the procurement cost and usage cost.

The first transmission member 92 and the second transmission member 93 can achieve the conversion of the movement direction through the inclined surface fit, which can simplify the structure of the transmission assembly 522, reduce the size of the transmission assembly 522, and help to increase the magnitude of movement of the carrying platform 521.

In some embodiments, the scissor unit 91 connects the second moving platform 532 and the carrying platform 521.

In some embodiments, the moving direction of the second transmission member 93 is parallel to the first direction X.

In some embodiments, the scissor unit 91 includes a first scissor arm 911 and a second scissor arm 912 hinged to each other. The transmission assembly 522 further includes a mounting shaft 94, the mounting shaft 94 is connected to the hinge point of the first scissor arm 911 and the second scissor arm 912 and extends in the hinge axis of the first scissor arm 911 and the second scissor arm 912, and the first transmission member 92 is mounted on the mounting shaft 94.

Illustratively, the first scissor arm 911 and the second scissor arm 912 are cross-hinged, one end of the first scissor arm 911 is hinged to the carrying platform 521, and the other end of the first scissor arm 911 is movably arranged on the second moving platform 532. One end of the second scissor arm 912 is hinged to the second moving platform 532, and the other end of the second scissor arm 912 is movably arranged on the carrying platform 521. The drive assembly 523 is mounted on the second moving platform 532.

In the embodiments, since the first transmission member 92 and the second transmission member 93 form the inclined surface fit, when the drive assembly 523 drives the second transmission member 93 to move, the first transmission member 92 and the second transmission member 93 can slide relative to each other along the inclined surface, thereby driving the mounting shaft 94 to ascend or descend. The ascending or descending of the mounting shaft 94 can drive the scissor unit 91 to perform a scissor motion, thereby achieving the ascending or descending of the carrying platform 521. The driving manner is simple, and the power consumption is low.

In some embodiments, the transmission assembly 522 includes two scissor units 91, the two scissor units 91 are arranged opposite to each other, the mounting shaft 94 is arranged between the two scissor units 91, and the two ends of the mounting shaft 94 are connected to the two scissor units 91, respectively.

In some alternative embodiments, the transmission assembly 522 includes a link, and the drive assembly 523 includes a cylinder. The cylinder may be fixed to the second moving platform 532, the link extends in the lifting direction Z, and the link is connected to the cylinder and the carrying platform 521. The cylinder may drive the link to extend or retract in the lifting direction Z, so as to drive the carrying platform 521 to ascend or descend.

In some embodiments, the battery swapping device 5 further includes a plurality of adjustment mechanisms 54, each battery swapping platform 51 is connected to the lifting mechanism 52 through at least one adjustment mechanism 54, and the adjustment mechanism 54 is configured to adjust the spatial posture of the corresponding battery swapping platform 51.

The adjustment of the spatial posture of the battery swapping platform 51 includes, but is not limited to, at least one of rotation, tilting, and ascending or descending of the battery swapping platform 51.

The battery swapping platform 51 may be connected to the lifting mechanism 52 through one adjustment mechanism 54, or may be connected to the lifting mechanism 52 through two or more adjustment mechanisms 54.

Due to the impact of factors such as the mounting precision of the battery 11 and the positional deviation of the electric device 6, the spatial posture of the battery 11 may deviate from an ideal state. In the embodiments of the present application, by providing the adjustment mechanism 54, the spatial posture of the corresponding battery swapping platform 51 can be adjusted based on the spatial posture of the battery 11, such that the spatial posture of the battery swapping platform 51 is adapted to the spatial posture of the battery 11, thereby improving the alignment precision of the battery swapping platform 51 and the battery 11, reducing the difficulty in the disassembly and assembly of the battery 11, and improving the disassembly and assembly efficiency.

In some embodiments, the adjustment mechanism 54 is arranged on the upper side of the carrying platform 521.

In some embodiments, each battery swapping platform 51 is connected to the lifting mechanism 52 through at least two adjustment mechanisms 54. Two or more adjustment mechanisms 54 can increase the adjustment range of the spatial posture of the battery swapping platform 51, and improve the stability of the battery swapping platform 51 during the adjustment process.

In some embodiments, in the lifting direction Z of the battery swapping platform 51, the adjustment mechanism 54 is configured to adjust the distance between the lifting mechanism 52 and the battery swapping platform 51.

Two or more adjustment mechanisms 54 can change the heights of two or more positions of the battery swapping platform 51, thereby adjusting the inclination angle of the battery swapping platform 51. As a result, the spatial posture of the battery swapping platform 51 is adapted to the spatial posture of the battery 11.

In some embodiments, the adjustment mechanism 54 includes a driving member 541 and a push rod 542, the driving member 541 is fixed to the lifting mechanism 52, the push rod 542 is connected to the battery swapping platform 51, and the driving member 541 is connected to the push rod 542 and is configured to drive the push rod 542 to move in the lifting direction Z.

Certainly, the adjustment mechanism 54 may also be of another structure, as long as the structure can change the distance between the carrying platform 521 and the battery swapping platform 51 in the lifting direction Z.

Optionally, the driving member 541 includes a cylinder.

In some embodiments, the driving member 541 may be fixed to one side of the carrying platform 521 facing the battery swapping platform 51. The push rod 542 is located between the carrying platform 521 and the battery swapping platform 51.

In some embodiments, the battery swapping platform 51 is rectangular. When viewed from the lifting direction Z, the outer contour of the battery swapping platform 51 is substantially rectangular.

In some embodiments, the lifting mechanism 52 is connected to four corners of the battery swapping platform 51 through four adjustment mechanisms 54, respectively.

The four adjustment mechanisms 54 can respectively adjust the heights of the four corners of the battery swapping platform 51, such that the adjustment range of the inclination angle of the battery swapping platform 51 can be increased, and the stability of the adjustment process can be improved.

In some embodiments, the battery swapping platform 51 includes a support plate 511 and a locking/unlocking mechanism 512. The support plate 511 is configured to support the battery 11. The locking/unlocking mechanism 512 is arranged on the support plate 511, and the locking/unlocking mechanism 512 is configured to release the locking between the battery 11 and the electric device 6 or lock the battery 11 to the electric device 6.

When the battery to be charged of the electric device 6 needs to be detached, the lifting mechanism 52 drives the support plate 511 to ascend, such that the support plate 511 abuts against the battery to be charged and supports the battery to be charged. After the support plate 511 supports the battery to be charged, the locking/unlocking mechanism 512 moves and releases the locking between the battery to be charged and the electric device 6.

When the fully charged battery needs to be mounted to the electric device 6, the lifting mechanism 52 drives the support plate 511 to ascend, such that the fully charged battery on the support plate 511 moves towards the electric device 6. When the fully charged battery reaches the set position, the locking/unlocking mechanism 512 moves and locks the fully charged battery to the electric device 6.

According to different connection relationships between the battery 11 and the electric device 6, the locking/unlocking mechanism 512 may be correspondingly configured in different structures.

In some examples, the battery 11 is snap-fitted to the electric device 6 through a snap-fit structure. In this case, the locking/unlocking mechanism 512 includes a liftable unlocking post. When the battery to be charged needs to be detached, the unlocking post ascends and presses the snap-fit structure to release the locking between the battery to be charged and the electric device 6.

In some other examples, the electric device 6 and the battery 11 are connected through a bolt or another threaded fastener. In this case, the locking/unlocking mechanism 512 includes a bolt sleeve, and the bolt sleeve can drive the bolt to rotate, so as to release the locking between the battery to be charged and the electric device 6.

In other examples, the locking/unlocking mechanism 512 may also adopt other mechanisms.

Optionally, the support plate 511 is rectangular. The four adjustment mechanisms 54 are connected to four corners of the support plate 511, respectively.

In some embodiments, the battery swapping platform 51 includes a plurality of locking/unlocking mechanisms 512.

In some embodiments, the adjustment mechanism 54 is connected to the carrying platform 521 and the support plate 511. Illustratively, the adjustment mechanism 54 is disposed between the carrying platform 521 and the support plate 511.

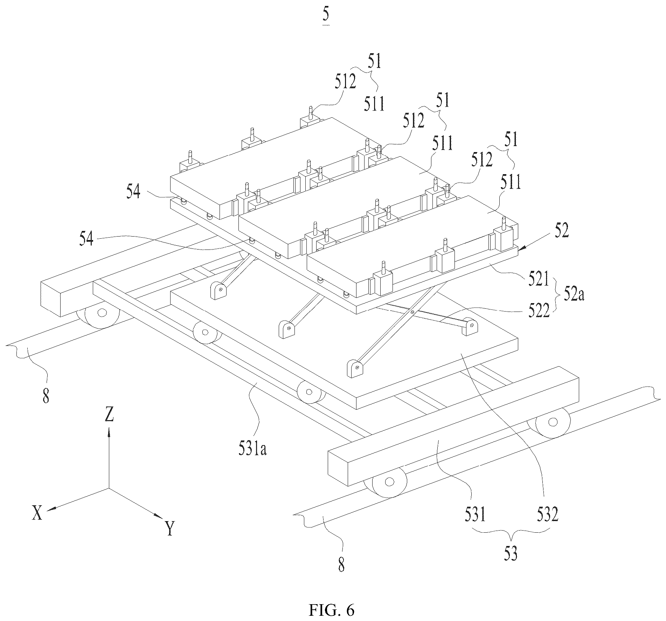

FIG. 6 is a schematic structural diagram of a battery swapping device according to some other embodiments of the present application.

As shown in FIG. 6, in some embodiments, the lifting mechanism 52 is configured to drive the plurality of battery swapping platforms 51 to ascend or descend synchronously, thereby simplifying the structure of the battery swapping device 5.

In some embodiments, the lifting mechanism 52 includes one lifting assembly 52a. The lifting assembly 52a includes a carrying platform 521, a transmission assembly 522, and a drive assembly 523. The carrying platform 521 is configured to support a plurality of battery swapping platforms 51. The transmission assembly 522 is arranged on one side of the carrying platform 521 facing away from the battery swapping platform 51 and is connected to the carrying platform 521. The drive assembly 523 is connected to the transmission assembly 522, and the drive assembly 523 is configured to drive the carrying platform 521 to ascend or descend through the transmission assembly 522.

The drive assembly 523 can achieve the ascending or descending of the carrying platform 521 through the transmission assembly 522, and the carrying platform 521 can synchronously drive the plurality of battery swapping platforms 51 to ascend or descend. According to the embodiments of the present application, a plurality of battery swapping platforms 51 are integrated on one carrying platform 521, which can simplify the structure of the lifting mechanism 52.

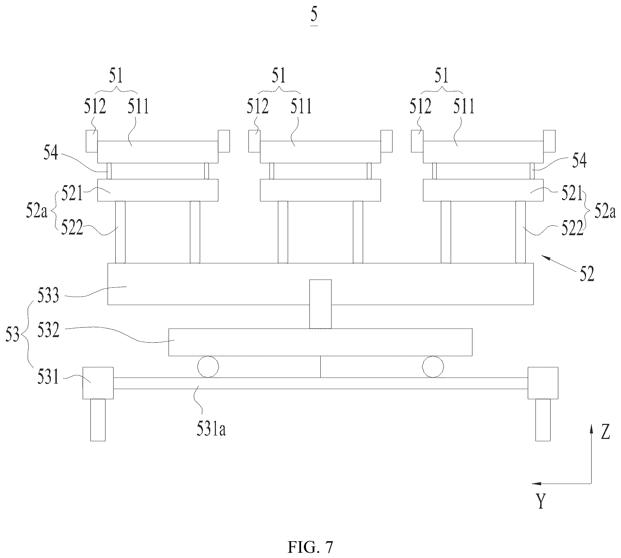

FIG. 7 is a schematic structural diagram of a battery swapping device according to yet some other embodiments of the present application.

As shown in FIG. 7, in some embodiments, the moving mechanism 53 further includes a rotating platform 533, the rotating platform 533 is arranged on the second moving platform 532, and the rotating shaft of the rotating platform 533 is parallel to the lifting direction Z. The lifting mechanism 52 is arranged on the rotating platform 533.

The rotating platform 533 can drive the battery swapping platform 51 to rotate through the lifting mechanism 52, so as to adjust the angle of the battery swapping platform 51. As a result, the battery swapping device 5 can adjust the battery swapping platform 51 according to the position of the battery 11, thereby improving the compatibility of the battery swapping device 5.

Referring to FIGs. 3 to 5, the embodiments of the present application provide a battery swapping device 5. The battery swapping device includes a moving mechanism 53, a lifting mechanism 52, a plurality of adjustment mechanisms 54, and a plurality of battery swapping platforms 51.

The moving mechanism 53 includes a first moving platform 531 and a second moving platform 532. The first moving platform 531 is configured to be movable in a first direction X, the second moving platform 532 is movably connected to the first moving platform 531 in a second direction Y, and the first direction X intersects with the second direction Y.

The lifting mechanism 52 includes a plurality of lifting assemblies 52a, and each lifting assembly 52a includes a carrying platform 521, a transmission assembly 522, and a drive assembly 523. The transmission assembly 522 connects the second moving platform 532 and the carrying platform 521, the drive assembly 523 is configured to drive the carrying platform 521 to ascend and descend through the transmission assembly 522, and the lifting direction Z of the carrying platform 521 is perpendicular to the first direction X and the second direction Y.

The plurality of battery swapping platforms 51 are arranged in one-to-one correspondence with the plurality of lifting assemblies 52a. Each battery swapping platform 51 is connected to the carrying platform 521 of the corresponding lifting assembly 52a through at least two adjustment mechanisms 54. In the lifting direction Z, the adjustment mechanisms 54 are configured to adjust the distance between the carrying platform 521 and the battery swapping platform 51.

Optionally, the battery swapping platform 51 includes a support plate 511 and a locking/unlocking mechanism 512. The support plate 511 is located above the carrying platform 521 and is configured to support the battery 11. The locking/unlocking mechanism 512 is arranged on the support plate 511, and the locking/unlocking mechanism 512 is configured to release the locking between the battery 11 and the electric device 6 or lock the battery 11 to the electric device 6. The carrying platform 521 and the support plate 511 are connected through four adjustment mechanisms 54.

In the battery swapping device 5 according to the embodiments of the present application, each battery swapping platform 51 is correspondingly provided with an adjustment mechanism 54 and a lifting assembly 52a, and the movement of each battery swapping platform 51 can be performed independently, which can meet the swap requirements of a single battery, dual batteries, or a plurality of batteries.

Although the present application has been described with reference to preferred embodiments, various modifications may be made and components herein may be replaced with equivalents without departing from the scope of the present application. In particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. A battery swapping device, comprising:
a plurality of battery swapping platforms, wherein each battery swapping platform is configured to disassemble and assemble a battery of an electric device; and
a lifting mechanism, connected to the plurality of battery swapping platforms and configured to drive the plurality of battery swapping platforms to ascend or descend.

2. The battery swapping device according to claim 1, wherein the lifting mechanism comprises a plurality of lifting assemblies, and each lifting assembly is connected to at least one battery swapping platform and is configured to drive the battery swapping platform to ascend or descend.

3. The battery swapping device according to claim 2, wherein a number of the lifting assemblies is the same as a number of the battery swapping platforms, and the plurality of lifting assemblies are arranged in one-to-one correspondence with the plurality of battery swapping platforms.

4. The battery swapping device according to claim 2 or 3, wherein the lifting assembly comprises:
a carrying platform, configured to support the battery swapping platform;
a transmission assembly, arranged on one side of the carrying platform facing away from the battery swapping platform and connected to the carrying platform; and
a drive assembly, connected to the transmission assembly, wherein the drive assembly is configured to drive the carrying platform to ascend or descend through the transmission assembly.

5. The battery swapping device according to claim 1, wherein the lifting mechanism is configured to drive the plurality of battery swapping platforms to ascend or descend synchronously.

6. The battery swapping device according to any one of claims 1 to 5, further comprising a plurality of adjustment mechanisms, wherein each battery swapping platform is connected to the lifting mechanism through at least one adjustment mechanism, and the adjustment mechanism is configured to adjust a spatial posture of a corresponding battery swapping platform.

7. The battery swapping device according to claim 6, wherein each battery swapping platform is connected to the lifting mechanism through at least two adjustment mechanisms.

8. The battery swapping device according to claim 7, wherein in a lifting direction of the battery swapping platform, the adjustment mechanism is configured to adjust a distance between the lifting mechanism and the battery swapping platform.

9. The battery swapping device according to claim 8, wherein the battery swapping platform is rectangular;
the lifting mechanism is connected to four corners of the battery swapping platform through four adjustment mechanisms, respectively.

10. The battery swapping device according to claim 8 or 9, wherein the adjustment mechanism comprises a driving member and a push rod, the driving member is fixed to the lifting mechanism, the push rod is connected to the battery swapping platform, and the driving member is connected to the push rod and is configured to drive the push rod to move in the lifting direction.

11. The battery swapping device according to any one of claims 1 to 10, wherein the battery swapping platform comprises:
a support plate, configured to support the battery; and
a locking/unlocking mechanism, arranged on the support plate, wherein the locking/unlocking mechanism is configured to release locking between the battery and the electric device or lock the battery to the electric device.

12. The battery swapping device according to any one of claims 1 to 11, further comprising a moving mechanism, wherein the moving mechanism is connected to the lifting mechanism, and the moving mechanism is at least configured to drive the lifting mechanism to move in a first direction, the first direction being perpendicular to the lifting direction of the battery swapping platform.

13. The battery swapping device according to claim 12, wherein the moving mechanism comprises:
a first moving platform, configured to be movable in the first direction; and
a second moving platform, movably connected to the first moving platform in a second direction, wherein the second direction intersects with the first direction and is perpendicular to the lifting direction, and the lifting mechanism is arranged on the second moving platform.

14. The battery swapping device according to claim 13, wherein the moving mechanism further comprises a rotating platform, the rotating platform is arranged on the second moving platform, and a rotating shaft of the rotating platform is parallel to the lifting direction;
the lifting mechanism is arranged on the rotating platform.

15. A battery swapping station, comprising:
a support platform, configured to support an electric device;
a battery compartment, configured to store a battery and charge the battery; and
the battery swapping device according to any one of claims 1 to 14, wherein the battery swapping device is configured to be movable between the support platform and the battery compartment.
